# FASCICULE DE BREVET EUROPEEN

(11) **EP 1 839 965 B1**
(45) Date de publication et mention de la délivrance du brevet: **15.02.2012**
(21) Numéro de dépôt: 07300874.0
(22) Date de dépôt: 19.03.2007
(51) Int. Cl.: B60R 22/26, B60N 2/30

(54) **Dispositif d'escamotage et/ou de relevage d'un brin boucle pour ceinture de sécurité de véhicule automobile**
Vorrichtung zum Einfahren und/oder Einziehen einer Gürtschnalle für Sicherheitsgurte eines Kraftfahrzeugs
Device for retracting and/or extending a loop strand for an automobile seatbelt

(30) Priorité: 30.03.2006 FR 0651094
(43) Date de publication de la demande: 03.10.2007
(73) Titulaire: PEUGEOT CITROËN AUTOMOBILES S.A., 78140 Vélizy Villacoublay (FR)
(72) Inventeur: Combeau, Frédéric, 25750 Desandans (FR)

(56) Documents cités:
- DE-A1- 10 242 603
- DE-A1- 10 307 859
- JP-A- 2 095 953

## Description

La présente invention est relative à un dispositif d'escamotage et de relevage automatique de l'élément qui supporte la boucle d'accrochage de l'extrémité de l'agrafe prévue sur le brin souple d'une ceinture de sécurité entourant la poitrine de l'utilisateur assis à l'intérieur de l'habitacle d'un véhicule automobile, permettant de fixer ou au contraire de détacher cette agrafe en cas d'usage ou de libération de la ceinture.

De façon usuelle, l'ensemble formé par l'élément de support et la boucle qu'il comporte, est appelé « brin boucle ».

Dans certains véhicules automobiles, le plancher du coffre arrière comporte, notamment pour chaque siège de la dernière rangée de ceux-ci dans l'habitacle, en particulier la troisième rangée derrière les sièges avant et une rangée intermédiaire, une fosse ou cuvette destinée à permettre de loger entièrement dans celle-ci le siège rabattable convenablement replié, afin d'accroître d'autant la surface de ce plancher et augmenter le volume de rangement disponible à l'intérieur du coffre.

Dans ces réalisations, le dossier de chaque siège de la dernière rangée se rabat sur son assise, laquelle est associée à un mécanisme articulé qui se replie sur lui-même en permettant d'effacer complètement le siège dans la cuvette de telle sorte que, dans cette position, la face arrière de ce siège forme un faux plancher venant se situer dans le plan du fond du coffre, sans discontinuité.

Au cours des opérations de repliement du siège dans la cuvette, ou à l'inverse de dépliement de celui-ci lorsqu'il reprend sa position initiale à l'extérieur de celle-ci au-dessus du plancher du coffre, il est particulièrement utile que son assise, qui comporte latéralement le moyen d'accrochage du brin boucle où s'engage l'agrafe de la ceinture de sécurité associée à ce siège, puisse se mettre automatiquement en place au-dessus du plancher à l'extérieur de la cuvette, sans gêner ces déplacements, ce brin boucle devant pouvoir aussi se loger dans la cuvette en même temps que l'assise du siège, en étant commandé et entraîné simultanément avec ce dernier lors de son repliement.

Un dispositif d'escamotage et/ou de relevage d'un brin boucle avec les caractéristiques du préambule de la revendication indépendante est divulgué dans le document DE 103 07 859 A1. Dans ce document une biellette et une patte d'actionnement, transversale, sont intégrées avec le bras de support du brin boucle.

La présente invention a pour objet un dispositif d'escamotage et de relevage automatique d'un brin boucle de ceinture de sécurité pour véhicule automobile qui répond à ces impératifs, grâce à un fonctionnement sûr, sans interférence avec le mouvement propre de l'assise du siège et sans risque de détérioration de celle-ci, notamment de sa garniture, le repliement ou le déploiement de ce brin boucle s'effectuant simultanément et avec la même vitesse que le siège.

A cet effet, le dispositif considéré, pour un siège dont l'assise est portée par une structure rabattable dans une cuvette de réception ou extractible à partir de celle-ci, au moyen d'un mécanisme de commande comportant un rail mobile agissant sur une biellette d'actionnement du brin boucle, lequel comprend un bras de support monté à pivotement autour d'un axe de rotation prévu sur une équerre fixe portant le mécanisme, se caractérise en ce que la biellette comporte une patte d'actionnement transversale coopérant avec le bras de support pour assurer le rabattement ou la libération du brin boucle à l'encontre d'un ressort apte à le faire pivoter autour de son axe de rotation, consécutivement à son entraînement par le rail, lui-même commandé par le mécanisme.

Selon une caractéristique particulière, le ressort de pivotement du bras de support autour de son axe de rotation est un ressort en spirale, monté autour de cet axe et dont une extrémité est solidaire du bras et l'autre est reliée à l'équerre fixe.

Selon une autre caractéristique, le bras de support du brin boucle articulé sur l'axe de pivotement porté par l'équerre fixe, est prolongé par un boîtier de réception et d'encliquetage de la boucle portée par la ceinture de sécurité.

D'autres caractéristiques d'un dispositif conforme à l'invention apparaîtront encore à travers la description qui suit d'un exemple de réalisation, donné à titre indicatif et non limitatif, en référence aux dessins annexés sur lesquels :
- Les Figure 1 et 2 sont des vues partielles en perspective du dispositif d'escamotage et/ou de relevage d'un brin boucle pour ceinture de sécurité conforme à l'invention, ce dispositif étant illustré en position relevée sur la Figure 1 et en position escamotée sur la Figure 2.
- La Figure 3 est une vue, également en perspective, à plus grande échelle, d'un détail du dispositif, illustrant plus particulièrement le ressort associé au bras de support du brin boucle.

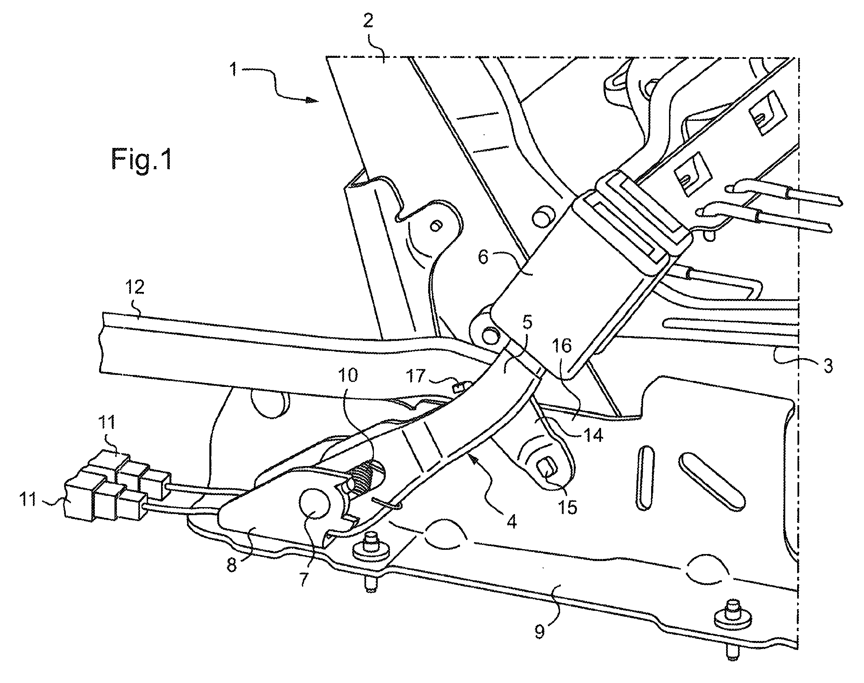

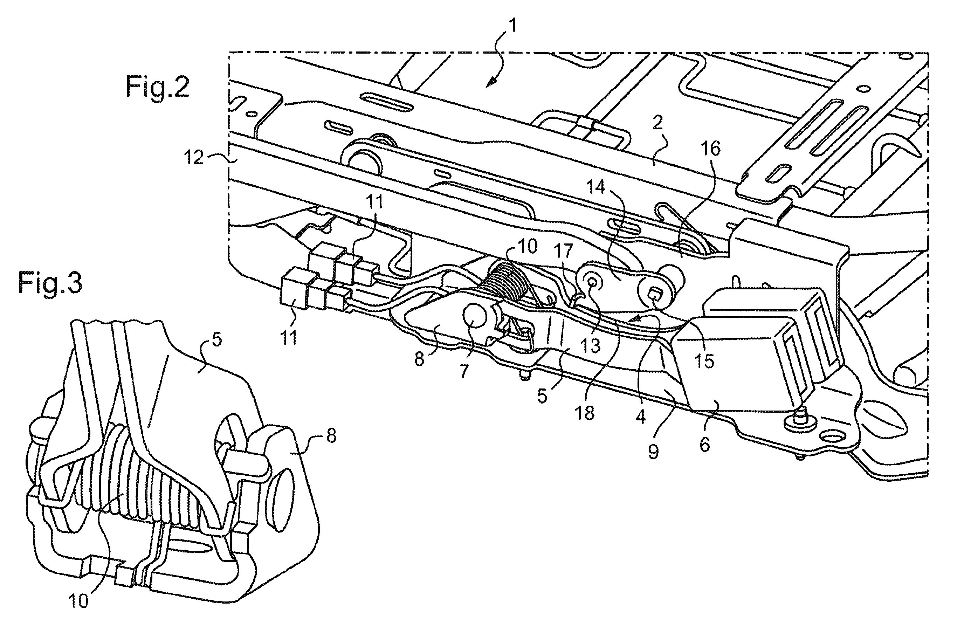

Sur les Figures 1 et 2, la référence 1 désigne dans son ensemble une structure rabattable pour siège de véhicule automobile, notamment du genre de ceux qui forment la dernière rangée de tels sièges dans l'habitacle, ceux-ci étant susceptibles de se rabattre pour s'escamoter complètement dans une fosse ou cuvette prévue dans le plancher de cet habitacle, en assurant la continuité de ce plancher et en augmentant ainsi le volume de rangement à l'intérieur du coffre arrière du véhicule.

La réalisation particulière de ces sièges n'est pas directement concernée par l'invention, de telle sorte qu'il n'est pas nécessaire de la décrire ici de façon détaillée, le siège comportant de manière usuelle un dossier 2 articulé sur une assise 3, comme schématiquement illustré sur la Figure 1, ce dossier pouvant être complètement rabattu sur l'assise pour se situer dans le plan du plancher du véhicule comme représenté sur la Figure 2, la structure du siège, pour plus de simplicité, étant illustrée dépourvue de la garniture qui l'enveloppe et qui lui confère le confort nécessaire à son usage.

Chaque structure de siège 1 est associée latéralement à un élément 4, appelé brin boucle, et qui comporte essentiellement un bras de support allongé 5, rigide, de longueur appropriée à la hauteur de l'assise du siège, ce bras étant muni à une extrémité d'au moins un boîtier 6 contenant intérieurement un mécanisme pour le verrouillage ou la libération d'une agrafe ou analogue (non représentée) qui peut coulisser selon la longueur de la ceinture de sécurité dont le siège est nécessairement équipé, afin de se positionner autour de la poitrine de l'utilisateur avant que l'agrafe ne soit engagée et immobilisée dans le boîtier.

Dans l'exemple représenté, le bras de support 5 est équipé de deux boîtiers 6 identiques, disposés côte à côte et destinés à coopérer indépendamment avec les agrafes des deux ceintures qui sont associées à deux sièges voisins dans l'habitacle, la réalisation et le montage de ces ceintures étant parfaitement usuels dans la technique et par conséquent non décrits ici plus en détail.

Le bras de support 5 est articulé à son extrémité opposée au boîtier 6 du brin boucle 4 autour d'un axe transversal 7, porté par un étrier 8 solidaire d'une équerre 9 assurant la fixation sur le fond de l'habitacle de la structure 1 du siège.

L'étrier 8 comporte, monté autour de l'axe 7, un ressort en spirale 10 (voir Figure 3), dont une extrémité est solidaire du bras et l'autre est reliée à l'équerre fixe 9, ce ressort exerçant en permanence sur le bras de support 5 un effort qui tend à relever celui-ci pour l'amener dans la position illustrée sur la Figure 1, l'escamotage du siège sous le plancher avec rabattement du bras 5 dans la position illustrée sur la Figure 2, s'effectuant à l'inverse à l'encontre de l'effort dû à ce ressort 10.

Chaque boîtier 6 du brin boucle 4 est par ailleurs associé à un contacteur, relié par un connecteur ou analogue 11 au circuit électrique du véhicule pour contrôler le verrouillage de l'agrafe dans le boîtier correspondant et avertir le conducteur en cas de défaut d'utilisation.

Conformément à l'invention, le mécanisme de rabattement et/ou de relèvement de la structure de siège 1 dans la cuvette du plancher de l'habitacle, comporte un rail de commande 12, déplaçable longitudinalement, articulé à son extrémité dirigée vers le brin boucle 4, autour d'un axe 13 sur lequel pivote également l'extrémité d'une biellette 14.

Cette biellette 14, plane et convenablement conformée dans son plan, est elle-même articulée autour d'un axe 15 sur un rebord 16 appartenant à l'équerre 9 de fixation de la structure 1 sur le fond de l'habitacle.

La biellette 14 comporte une patte 17 qui s'étend en légère saillie latérale vis-à-vis de son plan, de manière à venir porter contre la tranche 18 du bras de support 5 comme on le voit plus particulièrement sur la Figure 2, afin de pouvoir exercer sur ce bras un mouvement de basculement de celui-ci autour de l'axe 7 lorsqu'il s'agit de rabattre le brin boucle 4 et de le faire passer de la position relevée et illustrée sur la Figure 1 à la position rabattue, représentée sur la Figure 2.

Lors de l'escamotage du siège dans la cuvette du plancher, le rail mobile 12 fait pivoter la biellette 14 autour de l'axe 15 de l'équerre 9, en même temps qu'il tourne légèrement sur l'axe 13.

Dans ce mouvement, la biellette 14 applique un effort sur le bras de support 5 par sa patte transversale 17 et provoque la rotation de ce bras autour de l'axe 7 porté par l'étrier 8, jusqu'à ce qu'il atteigne sa position escamotée, en même temps que la structure 1 du siège se rabat sous le plancher de l'habitacle.

A l'inverse, lors du relevage du siège, avec retour du rail 12 en position initiale, le bras de support 5 pivote en sens contraire autour de l'axe 7 sous l'effet du ressort 10, ramenant le boîtier 6 du brin boucle 4 dans sa position d'utilisation sur le côté du siège.

On réalise ainsi un dispositif d'escamotage et/ou de relevage du brin boucle des ceintures de sécurité particulièrement simple et efficace, à fonctionnement uniquement mécanique et sans aucun appui ou frottement des pièces mobiles sur la garniture du siège, évitant ainsi toute détérioration possible de celle-ci lors des divers mouvements réalisés. De plus, la vitesse de commande de relevage ou d'abaissement du bras de support du brin boucle est exclusivement liée aux mouvements du siège, ce qui évite que ce brin boucle ne soit relevé ou escamoté de façon indépendante du siège qui lui est associé.

Bien entendu, il va de soi que l'invention ne se limite pas à l'exemple de réalisation plus spécialement décrit et représenté ci-dessus ; elle en embrasse au contraire toutes les variantes.

## Revendications

1. Dispositif d'escamotage et/ou de relevage d'un brin boucle (4) pour ceinture de sécurité de véhicule automobile, associée à un siège dont l'assise est portée par une structure (1) rabattable dans une cuvette de réception ou extractible à partir de celle-ci, au moyen d'un mécanisme de commande comportant un rail mobile (12) agissant sur une biellette d'actionnement (14) du brin boucle, lequel comprend un bras de support (5) monté à pivotement autour d'un axe de rotation (7) prévu sur une équerre fixe (9) portant le mécanisme, **caractérisé en ce que** la biellette (14) comporte une patte d'actionnement (17), transversale, coopérant avec le bras de support (5) pour assurer le rabattement ou la libération du brin boucle (4) à l'encontre d'un ressort (10) apte à le faire pivoter autour de son axe de rotation (7), consécutivement à son entraînement par le rail (12), lui-même commandé par le mécanisme.

2. Dispositif selon la revendication 1, **caractérisé en ce que** le ressort de pivotement (10) du bras de support (5) autour de son axe de rotation (7) est un ressort en spirale, monté autour de cet axe et dont une extrémité est solidaire du bras et l'autre est reliée à l'équerre fixe (9).

3. Dispositif selon l'une des revendications 1 ou 2, **caractérisé en ce que** le bras de support (5) du brin boucle (4) articulé sur l'axe de pivotement (7) porté par l'équerre fixe (9), est prolongé par un boîtier de réception et d'encliquetage (6) de la boucle portée par la ceinture de sécurité.

## Claims

1. A device for retracting and/or raising of a strand buckle (4) for a safety belt of a motor vehicle, associated with a seat, the sitting surface of which is carried by a structure (1) able to be folded in a receiving tray or able to be extracted therefrom, by means of a control mechanism comprising a movable rail (12) acting on an activation link (14) of the strand buckle, which comprises a support arm (5) pivotably mounted about a rotation axis (7) provided on a fixed angle bracket (9) carrying the mechanism, **characterized in that** the link (14) comprises a transverse activation tab (17) cooperating with the support arm (5) to ensure the folding or the releasing of the strand buckle (4) against a spring (10) suited to cause it to pivot about its rotation axis (7), consecutively to its entrainment by the rail (12), itself controlled by the mechanism.

2. The device according to Claim 1, **characterized in that** the pivoting spring (10) of the support arm (5) about its rotation axis (7) is a spiral spring, mounted about this axis and one end of which is integral with the arm and the other of which is connected to the fixed angle bracket (9).

3. The device according to one of Claims 1 or 2, **characterized in that** the support arm (5) of the strand buckle (4) articulated on the pivoting axis (7) carried by the fixed angle bracket (9) is extended by a receiving and locking case (6) of the buckle carried by the safety belt.

## Patentansprüche

1. Vorrichtung zum Einziehen und/oder Rückheben eines Gurtschlossarms (4) für Sicherheitsgurt eines Kraftfahrzeugs, verbunden mit einem Sitz, dessen Sitzfläche von einer Struktur (1) getragen wird, die in eine Aufnahmewanne zurückgeklappt oder aus dieser mittels eines Steuermechanismus herausgezogen werde kann, der eine bewegliche Schiene (12) aufweist, die auf einen Betätigungsschwingarm (14) des Gurtschlossarms einwirkt, der einen Tragarm (5) aufweist, der um eine Rotationsachse (7), die auf einem stationären Winkel (9) vorgesehen ist, der den Mechanismus trägt, schwenkend montiert ist, **dadurch gekennzeichnet, dass** der Schwingarm (14) eine Betätigungspratze (17) aufweist, die quer ist, die mit dem Tragarm (5) zusammenwirkt, um das Zurückklappen oder das Freigeben des Gurtschlossarms (4) gegen eine Feder (10) sicherzustellen, die ihn im Anschluss an sein Antreiben durch die Schiene (12), die selbst von dem Mechanismus gesteuert wird, um seine Rotationsachse (7) schwenken lassen kann.

2. Vorrichtung nach Anspruch 1, **dadurch gekennzeichnet, dass** die Feder (10) zum Schwenken des Tragarms (5) um seine Rotationsachse (7) eine Spiralfeder ist, die um diese Achse montiert ist, und von der ein Ende fest mit dem Arm verbunden ist und das andere mit dem stationären Winkel (9) verbunden ist.

3. Vorrichtung nach einem der Ansprüche 1 oder 2, **dadurch gekennzeichnet, dass** der Tragarm (5) des Gurtschlossarms (4), der auf der Schwenkachse (7), die von dem stationären Winkel (9) getragen wird, angelenkt ist, von einem Gehäuse zum Aufnehmen und Einrasten (6) der Schnalle, die von dem Sicherheitsgurt getragen wird, verlängert wird.
